# EUROPEAN PATENT APPLICATION

(11) **EP 4 489 234 A1**
(43) Date of publication of application: **08.01.2025**
(21) Application number: 23184171.9
(22) Date of filing: 07.07.2023
(51) Int. Cl.: H01S 3/00, G02B 6/42, B23K 26/06, G02B 26/08

(54) **AN INTERCONNECTING DEVICE AND A LASER SYSTEM COMPRISING THE INTERCONNECTING DEVICE**

(71) Applicant: NKT Photonics A/S, 3460 Birkerød (DK)
(72) Inventor: SEIFERT, Albert, 8105 Regensdorf (CH); THOMSEN, Carsten Lilleholt, 3460 Birkerød (DK); POBERAJ, Gorazd, 8105 Regensdorf (CH)
(74) Representative: Zacco Denmark A/S

(57) **Abstract**

An interconnecting device for interconnecting a laser device and an application device is disclosed. The interconnecting device comprises at least an optical fiber, an optical switch, and an output unit for outputting a laser beam to the application device. The interconnecting device is configured to receive a laser beam from the laser device and deliver the laser beam to the application device. The optical switch is arranged after the optical fiber and configured to modulate the amplitude of the laser beam.

A laser system comprising a laser device and the interconnecting device is further disclosed. A drift of the laser beam is compensated for prior to being received in the interconnecting device.

## Description

### TECHNICAL FIELD

The invention relates to the technical field of laser systems and devices interconnecting the laser systems with application devices.

### BACKGROUND

Laser systems, and in particular pulsed laser systems, offer numerous advantages in various fields such as material processing, medical applications such as ophthalmology, and scientific research. However, these systems face drift issues of the laser beam, which can lead to undesirable effects on the laser output and limit their performance. Drift in pulsed lasers is primarily caused by variations in operating conditions, such as temperature, power supply stability, nonlinear effects in the laser cavity, operational modes, etc. To overcome and mitigate these drift issues, new techniques and technologies are needed.

### SUMMARY OF THE INVENTION

It is an object of the present disclosure to provide a device and a system to address the problem of laser beam drift in laser systems. The described solutions aim to improve the stability and accuracy of laser output, reduce downtime and maintenance, and enhance the overall performance of pulsed laser systems.

The object is satisfied by an interconnecting device in accordance with claim 1 as well as by a system in accordance with claim 16 or claim 17. Preferred embodiments of the invention are described in the dependent claims.

In a first aspect, an interconnecting device for interconnecting a laser device and an application device is disclosed. The interconnecting device comprises at least an optical fiber, an optical switch, and an output unit. The interconnecting device is configured to receive a laser beam from the laser device and deliver the laser beam to the application device. The optical fiber is arranged at an input of the interconnecting device while the optical switch is arranged after the optical fiber. The optical switch is configured to modulate the amplitude of the laser beam. The output unit is configured to output the laser beam to the application device.

By providing an interconnecting device comprising a fiber at its input, a simple, reliable, and user-friendly coupling to the laser device is ensured. Furthermore, by providing an optical switch in the interconnecting device, it is ensured that a user of an application device can control the delivery of the laser beam to the application device while the laser beam arrives at the switch as a continuous and reliable laser signal. Finally, by providing an interconnecting device with a switch after the laser device and right before the application device, it is ensured that laser drifts are compensated for prior to the optical switch such that optical switch does not influence the laser beam. In other words, laser beam drifts are compensated for prior to the critical fiber-coupling interface (i.e. prior to the optical fiber) and the switch, and the optical switch does not influence the laser beam position and angle at the critical fiber-coupling interface.

An interconnecting device for interconnecting a laser device and an application device is to be understood as a device with an optical input and an optical output configured to be conveniently attached by a user of the application device to both the laser device and the application device.

The laser device is configured to deliver the laser beam to the interconnecting device. The laser device may be configured to deliver the pulsed laser beam. The laser beam is generated by a laser source and typically drifts within the laser device. The laser device may be configured to compensate for the drift of the laser beam. The laser device may comprise an amplifier to thereby deliver an amplified laser beam with high total average power of at least 1 KW.

The application device is to be understood as a device which delivers the laser beam to the user and can be designed in accordance to user's needs and/or particular application. In some examples, the application device may be a surgical delivery device, such as a surgical device for eye surgery. The application device may be referred to as a delivery device or a processing head. When the laser beam is received at the application device, it should be stable and reliable and should have minimal variations of its parameters so that the user can perform a desired application with desired precision. This is achieved by arranging the interconnecting device in front of the application device.

The optical fiber may be placed at the input of the interconnecting device. The use of the optical fiber in the interconnecting device allows for delivery of the laser beam from the laser device to the application device while at the same time ensuring a reliable coupling of the laser beam from the laser device. Any drift of the laser beam may be compensated for before the laser beam is coupled to the fiber.

In some embodiments, the optical fiber may be a solid-core fiber. The solid-core fibers may include step-index fibers, a photonic crystal solid core fibers, etc. Typically, the solid-core fibers may be used for guiding continuous laser beams or pulsed laser beams with long pulses, such as more than 100 ns long pulses and pulses with low peak-power.

In some embodiments, the optical fiber may be a hollow-core fiber. Hollow core fibers (HCFs) are optical fibers with a hollow core surrounded by a thin layer of cladding material. HCFs are capable of guiding laser pulses (e.g. ps and fs pulses) with high peak-power without damage to the fiber. This is because the light is confined in the central hollow core, thus reducing the interaction between the light and the cladding material. The core may be evacuated or filled with air or other gases. Preferably, the core of the HCF is evacuated (i.e. there is vacuum in the core), as other media present in the core may cause pulse distortion if the pulses are ultra-short (e.g. 100 ps or shorter) and have a high peak-power (e.g. 1 kW or more). The use of HCF in the interconnecting device allows for high peak power delivery of laser beam from the laser device to the application device while at the same time ensuring a reliable coupling of the laser beam from the laser device. Any drift of the laser beam may be compensated for before the laser beam is coupled to the interconnecting device.

In some embodiments, the HCF may be a hollow-core photonic crystal fiber (HC-PCF). The key characteristic of HC-PCFs is the presence of a periodic pattern of air holes running along the length of the fiber. These air holes create a photonic bandgap, i.e. a range of wavelengths in which light propagation is forbidden. The bandgap prevents the guided light from leaking into the cladding, thereby confining it within the hollow core. The HC-PCFs can be used to deliver laser beams with high peak power and high-quality mode profiles, enabling applications in laser material processing, medical applications, such as surgeries, scientific research, etc. In some embodiments, the HCF may be an anti-resonance hollow core photonic crystal fiber (AR-HC-PCF). In some embodiments, the HCF may be a revolver hollow-core fiber. In some embodiments, the HCF may be a hollow core photonic bandgap fiber. In some embodiments, the HCF may be a hollow glass waveguides based on fused silica capillaries.

In the present context, the optical switch is to be understood as a device used to control the transmission of light by, e.g., blocking or allowing the passage of light through the interconnecting device and to the application device, or by modulating frequency of the pulses, or similar. The optical switch may be an amplitude modulating device, an amplitude controlling device, or a shutter. The optical switch may be a switching device, such as an acousto-optical modulator (AOM), or an electro-optical modulator (EOM). AOMs and EOMs are preferred due to their ultra-fast response. The optical switch may be used and controlled by a user of the application device, such that light is delivered on user's demand. Alternatively, the optical switch may be automatically controlled via a control unit of the laser system.

The interconnecting device is configured to receive the laser beam from the laser device and deliver the laser beam to the application device. Only after the optical fiber, the optical switch is arranged, allowing for a customizable output from the interconnecting device and to the application device.

In some embodiments, the optical switch is configured to control delivery of the laser beam to the application device. In some examples, the switch may fully block the laser beam from entering the application device such that no light is delivered to the application device. In some examples, the switch may be configured to allow at least 50% of the laser beam to pass through the interconnecting device, such that all the light can enter into the application device. The optical switch may be free-space based, such that the laser beam from the optical fiber (or an intermediate component arranged between the optical fiber and the switch) is delivered to free-space and then coupled to the optical switch. The optical switch may be realized by a mechanical shutter, an EOM, or an AOM.

In some embodiments, the optical switch is configured to allow the laser beam, or a part thereof, to be transmitted into the application device. The user of the application device may control the optical switch such that the laser beam is delivered to the application device. In some embodiments, the optical switch may be controlled automatically. The automatic control of the switch may depend on the laser beam drift compensation happening before the laser beam enters into the interconnecting device. Namely, if the drift of the laser beam has been compensated for and the laser beam is efficiently coupled into the interconnecting device, the switch may automatically be configured to allow passage of the light beam towards the application device. This feature of the switch can be used in cases when the application device requires a constant delivery of the laser beam.

In some embodiments, the optical switch is configured to block the laser beam from being transmitted into the application device. The user of the application device may control the optical switch such that the laser beam is blocked and therefore not delivered to the application device. In some embodiments, the optical switch may be controlled automatically. The automatic control of the switch may depend on the laser beam drift compensation happening before the laser beam enters into the interconnecting device. Namely, if the drift of the laser beam has not been compensated for and the laser beam is not efficiently coupled into the interconnecting device, the switch may automatically be configured to block any light beam delivery towards the application device. This feature of the switch can be used as a precautionary measure to protect the application device and/or the final point to which the laser beam is supposed to be delivered by the application device.

In some embodiments, the optical switch is configured to receive an external input to thereby control delivery of the laser beam to the application device. The external input may be received from a user of the application device. Thereby, the laser beam is delivered to the application device on user's demand. Alternatively or additionally, the external input may be received from a sensor configured to detect compensation of the laser beam drift in the laser device and/or power received at the interconnecting device.

In some embodiments, the interconnecting device may further comprise a post-compressing unit configured to temporally compress pulses of the laser beam. The post-compressing unit may be arranged after the optical switch. The post-compression unit may be a free-space component configured to receive the laser beam from the optical switch through free space. The post-compression unit may be controlled by a control unit depending on the required final application of the laser beam. The post-compression unit may be configured to reduce the pulse duration down to ps or fs range. The post-compression unit further directs the laser beam to the output of the interconnecting device. Alternatively, the interconnecting device may comprise a pulse-stretcher configured to temporally extend the laser pulses.

In some embodiments, the output unit comprises a beam-collimator configured to collimate the laser beam and deliver it to the application device. The beam-collimator may also be a free-space based component receiving the laser beam from the optical switch/compressor/stretcher through free space. The beam-collimator ensures that the laser beam is collimated and has a low divergence and as such delivered to the application device improving the accuracy and efficiency of the final application. The output unit may also comprise a processing camera configured to track quality of the incoming light beam and optionally control the collimator accordingly.

The output unit may comprise a power sensor configured to monitor the output power from the optical fiber and received at the output unit. The power sensor may be fixed during operation of the application device. In other words, the power sensor may form an integral part of the output unit at all times to monitor a power being output from the optical fiber and received at the output unit and may not be removed or re-placed at different times during operation or calibration. The power sensor may provide a feedback signal configured to optimize the coupling of the laser beam into the optical fiber. Coupling optimization based on this feedback signal may be beyond the accuracy of position and angle sensors comprised in a fiber-coupling unit. This power sensor may also be used to recalibrate the position and angle sensors of the fiber-coupling unit. The recalibration may be required as, in some cases, the mechanical deformation of a fiber-coupling unit's housing may exist over time. Additionally, various changing conditions can lead to deterioration of a reference position/angle signal in the fiber-coupling unit.

The output unit may comprise a first reference sensor while the fiber-coupling unit may comprise a second reference sensor. The first and the second reference sensors may communicate with a local area network and then be used to detect, through the local network, any discrepancies of the readings and act as a safety mechanism to protect the fiber and the application device.

The output unit may comprise an energy measurement device. The output unit may further comprise a peak-power measurement device, such as a two-photon-absorption photo-diode (TPA PD). In some embodiments, the output unit may comprise a spectrometer configured to monitor the optical spectrum. In some embodiments, the output unit may comprise a full pulse-width measurement device configured to directly measure the pulse width of the laser beam pulses.

In some embodiments, the optical switch may form part of the output unit. Typically, the optical switch may be placed after various sensors of the output unit. Such configuration enables a continuous input of the laser beam to the sensors of the output unit which then may send a feedback to the fiber coupling unit for an additional coupling optimization of the laser beam into the optical fiber and additional drift compensation.

In some embodiments, the laser beam is delivered to the output unit in free space. Typically, all components of the interconnecting device, apart from the optical fiber, are free-space optical components capable of transmitting high peak-power ultra-short laser pulses. The same stands for the output unit.

In some embodiments, the interconnecting device comprises a free-space output connector for connecting to the application device. The free-space output connector may be configured to detachably attach to the application device.

In some embodiments, the interconnecting device further comprises a fiber-coupling unit arranged before the optical fiber and configured to output the laser beam to the optical fiber, the fiber-coupling unit being configured to compensate for drift of the laser beam. The fiber-coupling unit may comprise an active alignment system configured to compensate for drift of the laser beam. The active alignment system may comprise alignment sensors and beam steering means. The alignment sensors may be configured to detect properties of the laser beam and provide input to the beam steering means. The beam steering means may be configured to steer the laser beam in accordance with the detected properties such that the laser beam is aligned with an input of the fiber coupling-unit and guides and steers the beam to the optical fiber. The beam steering means may comprise one or more mirrors, movable mirrors, rotating wedges, acousto-optic deflectors, etc., or any combination of those. The beam steering means may comprise a controller. The controller may receive input from the alignment sensors and control the mirrors, wedges, deflectors, etc. in accordance with the input received from the alignment sensors. In some embodiments, the fiber-coupling unit comprises a fiber coupler configured to connect with the optical fiber.

In a second aspect a laser system comprising a laser device and an interconnecting device according to the first aspect is disclosed. In this aspect, a drift of the laser beam is compensated for in the interconnecting device, typically comprising a fiber-coupling unit.

In traditionally used systems utilizing an ultra-fast laser beam with pulses having typically a high peak power, free-space components are predominantly used. An optical switch is typically arranged right after the laser source and before any beam aligning system for delivering the beam to the application device. In these systems, the optical switch is typically controlled by the user. It is only opened during a relatively short actual processing time needed for the application device. While the optical switch is blocking the beam, there is no knowledge on where the beam will come out when the switch is opened after certain idle time. In other words, the beam aligning system with its sensors (position/angle and power sensor) is blind most of the time and cannot keep track of the beam and compensate for beam pointing drifts. High risk of damaging the fiber input facet and other components in the laser system originates from this uncertainty and finally the application device may not receive desired laser beam for performing a desired task, thereby reducing the performance of the application device. Predictions by activity/inactivity time are difficult and unreliable. Therefore, there is a need for a system that will reliably provide a laser beam to the application device.

The shortcoming of the known art is solved by the present invention by changing the architecture of the laser system and placing the optical switch only after the laser drifts are compensated for. The optical switch can be one of the sources of the laser beam drifts when placed right after the laser source due to changing thermal load upon operation of the switch. Placing the optical switch after the laser device and after the fiber is to ensure that a continuous and reliable signal is present at the position/angle/power sensors of the fiber-coupling unit. Thereby, the beam drift can be compensated for to ensure optimal coupling into the fiber.

According to the second aspect, the laser drifts are compensated for in the interconnecting device by the fiber-coupling unit arranged before the optical fiber and the switch. According to a third aspect, the laser drifts are compensated for in the laser device, i.e. prior to the interconnecting device comprising a fiber, switch, and an output unit. The second and third aspect differ in the placement of the fiber-coupling unit, i.e. in the second aspect, the fiber-coupling unit forms part of the interconnecting device while in the thirds aspect, the fiber-coupling unit forms part of the laser device.

In the third aspect, disclosed is a laser system comprising a laser device and an interconnecting device including a fiber, a switch, and an output unit. A drift of the laser beam is compensated for prior to being received in the interconnecting device. The laser system thus comprises a laser device connected to the interconnecting device. The laser system can connect to the application device via the interconnecting device. In more details, the laser system comprises the laser device that may connect to an optical fiber, the optical fiber connects to the optical switch, and the switch connects to the output unit configured to be connected to the application device. The key feature of the third aspect is that any drift of the laser beam is compensated for in the laser device such that optimal coupling with the fiber is ensured before the interconnecting device, before the optical switch, and thus before the application device.

The laser beam generated by a laser source may drift due to many different reasons. The laser beam may exhibit long-term drifts, start-up drifts, temperature drifts, etc. Temperature drifts occur due to changes in the temperature. Similar drifts of the laser beam may occur due to changes in pressure, or humidity of the environment through which the beam is passing. Moreover, mechanical vibrations or movements of the apparatus or support structures can cause small misalignments in the optical components or mirrors where the beam is passed through, leading to the laser beam drifting off the desired path. Furthermore, any amplitude modulation of the laser beam can cause drifting of the laser beam.

The interconnecting device, comprising the optical fiber, such as a HCF, along with the switch, is configured to receive the laser beam from the laser device and deliver the laser beam to the application device. The optical fiber is arranged at an input of the interconnecting device while the optical switch is arranged after the fiber. The optical fiber ensures precise and convenient coupling with the laser device and further delivery to the application device through the output unit. In such system, laser drifts are compensated for prior the interconnecting device and the optical switch, resulting in a reliable laser system delivering precise and reliable laser beam to the application device.

In some embodiments, the laser device comprises a pulsed laser source configured to generate a laser beam and a fiber coupling unit configured to output the laser beam to the interconnecting device. The pulsed laser source is arranged to deliver the laser beam to the fiber-coupling unit. The laser beam may be delivered from the laser source to the fiber-coupling unit through free space.

The pulsed laser source may be configured to generate nano-second pulses, picosecond pulses, or femto-second pulses. The pulsed laser source may comprise a compressor for temporally compressing the laser pulses. The pulsed laser source may generate pulses with high peak power and high total power, such as more than 1 KW. The laser source may be a supercontinuum light source spanning from visible spectral range up to infra-red spectral range. Pulsed lasers are widely used in various fields such as for industrial material processing, in medical applications, for biomedical imaging and diagnostics, micro-machining, 3D printing, etc. It is therefore beneficial to use a pulsed laser source in the present laser system allowing for a large range of application devices.

The fiber-coupling unit may comprise free-space components configured to guide and couple light into the interconnecting device, i.e. into the optical fiber, such as a solid core fiber, or an HCF. The fiber-coupling unit ensures a continuous and reliable signal into the optical fiber.

In some examples, the fiber-coupling unit comprises an active alignment system configured to compensate for drift of the laser beam. The active alignment system may be configured to track the laser beam from the laser source and to dynamically reposition the laser beam such that optimal coupling between the laser device and the interconnecting device is achieved. While the laser source is operating, the fiber-coupling unit continuously receives the laser beam therefrom and is thereby capable of continuously compensating for any drifts of the laser beam. When the laser source is turned off, the active alignment system is also off, as there is no input beam. Once the laser is turned on, the active alignment system is also on, and can actively compensate for the laser's start-up drifts. It is beneficial to have an active alignment system continuously receiving the laser beam as it ensures optimal coupling of the beam with the optical fiber.

In some examples, the active alignment system comprises alignment sensors and beam steering means, such as steering mirrors. The alignment sensors may be configured to detect properties of the laser beam and provide input to the beam steering means. The beam steering means may be configured to steer the laser beam in accordance with the detected properties such that the laser beam is aligned with an output of the fiber-coupling unit. Alternatively or additionally to the steering mirrors, rotating wedges, acousto-optic deflectors, and the like, may be used. The output of the fiber coupling unit may be a fiber coupler. The alignment sensors may comprise any kind of position sensitive devices such as one or more cameras based on CCD or CMOS chips, PSD photo-diodes, 4-quandrant photo-diodes, or others configured to track the path of the laser beam. The steering mirrors may be motorized mirrors driven by a controller. The controller may receive measurements from the alignment sensors and drive the mirrors to provide optimized light coupling between the laser device and the interconnecting device. The mirrors may be continuously steered so that optimal alignment is achieved all the time.

The fiber-coupling unit may comprise additional sensors, e.g. check-sensors, such as power sensors and/or pulse energy sensors, configured to track the active alignment system and to provide a confirmation signal comprising information on alignment between the laser device and the interconnecting device. The confirmation signal may be available for the user of the application device as well as to the optical switch. If the confirmation signal indicates that the laser beam is not aligned with the interconnecting device, the optical switch may be disabled or the user of the application device may be warned not to operate the switch. Once the alignment is achieved and the drift is compensated, the confirmation signal may enable the switch and/or allow the user to operate the switch in accordance to demands of the application device. It is beneficial to have the check sensors in the fiber-coupling unit, to ensure that the user can use the laser beam only when the active alignment system have compensated for the laser beam drifts. Alternatively, the check-sensors may be arranged in the interconnecting device before the optical fiber.

The power and/or pulse energy sensors may be used at the input and output of the fiber-coupling unit. Their output signals may be tracked over time and the changes in the signals may be used to track if a damage or misalignment with the fiber occurs. The power and/or pulse energy sensors may be used to generate a warning or block operation, if the beam drift is too large before the compensation starts.

The beam drift compensation may not be active all the time. In some cases, a drift compensation during operation of the application device may not be allowed. A re-optimization may be done at another point in time, e.g., during idle time of the application device.

In some embodiments, the check sensors may be configured to automatically disable the optical switch and put it in a blocking mode, i.e., no delivery of light to the application device, in cases when the alignment system did not compensate the drift. This may occur in situations when the drift is too severe such that the active alignment system cannot respond to the changes timely. In these cases there may be a sudden drop in power delivered through the optical fiber. This feature may be used as a protective measure for the application device.

In some examples, the fiber-coupling unit comprises an output fiber coupler configured to connect with the optical fiber of the interconnecting device. The steering means of the fiber coupling unit may be configured to couple light into the fiber coupler. The fiber coupler ensures a simple, convenient and reliable connection between the laser device and the interconnecting device.

In some examples, the laser device further comprises a compressor configured to temporally compress the pulses of the laser beam. The pulse compressor in the laser device may be controlled by a control unit. The control unit may receive an input from the user of the application device. The pulse compressor may be a free space component receiving laser beam from the laser source and further delivering light, through free space, to the fiber coupling unit, its sensors and mirrors. In some examples, the laser system may comprise only one pulse compressor arranged in the laser device. In this case, another compressor in the interconnecting device may be omitted. In some examples, the laser system may comprise two or more compressors, wherein at least one pulse compressor forms part of the laser device and at least one pulse compressor forms part of the interconnecting device.

In some embodiments, the laser source may be a continuous wave (CW) laser or may be a pulsed laser, such as a pulsed diode or fiber laser, a q-switched laser or a mode-locked laser, configured to provide the laser beam. There may be one or more lasers comprised in the laser source.

### Examples

The above aspects, accompanying claims, and/or examples disclosed herein above and later below may be suitably combined with each other as would be apparent to anyone of ordinary skill in the art.

A laser system may comprise a pulsed laser source generating a pulsed laser beam. The pulsed laser beams may be temporally compressed or temporally stretched by a pulse compressor or a pulse stretcher depending on use. The pulsed laser beam may have a high peak power and a high total power, e.g. higher than 1 KW. Such laser beam with the high total/peak power may be coupled to an optical fiber. Depending on the peak power and pulse duration values, different optical fibers can be utilized. For instance, for ultra-short pulses, e.g. less than 100 ps, having a high peak power, e.g. more than 1 kW, a hollow core fiber may be used. For lower peak powers and longer pulses, e.g. longer than 100 ns with a peak power of 1 W, a solid core fiber may be used. In order to ensure efficient coupling into the optical fiber (HCF or solid core), the pulsed laser beam may, through free space, be directed to a system of steering means (e.g. motorized mirrors) and sensors configured to compensate for drifts of the laser beam causing the laser beam to change its path. The optical fiber may then deliver the laser beam to an application device operated by a user. The user may, on demand, control the delivery of the laser beam to the application device. The laser system may therefore comprise a switch or a shutter, configured to control delivery of the laser beam to the application device. The switch may be arranged after the optical fiber after which the laser beam can be delivered to the application device through an output unit, such as an output collimator. If required, the laser beam may be further temporally compressed/stretched before the delivery to the application device. Therefore, a compressor/stretcher may be arranged after the switch for further pulse duration modulation. The switch may also be configured to change a repetition rate of the laser beam, depending on the demands from the application device.

Additional features and advantages are disclosed in the following description, claims, and drawings, and in part will be readily apparent therefrom to those skilled in the art or recognized by practicing the disclosure as described herein. We also note that all the features described in connection to the first aspect can be combined with the features described in the second and the third aspect. Also, the features of the second aspect can be combined with the features described in connection with the third aspect, and vice versa.

### BRIEF DESCRIPTION OF THE DRAWINGS

Preferred embodiments of the present invention will now be described by way of example only and with reference to the accompanying drawings in which:
Fig. 1 shows a prior art implementation of a laser system.
Fig. 2 shows an exemplary embodiment of a laser system according to the present disclosure.
Fig. 3 shows another exemplary embodiment of a laser system according to the present disclosure.
Fig. 4 shows one exemplary implementation of an interconnecting device according to the present disclosure.
Fig. 5 shows another exemplary implementation of a laser system according to the present disclosure.
Fig. 6 shows yet another exemplary implementation of a laser system according to the present disclosure.

### DETAILED DESCRIPTION

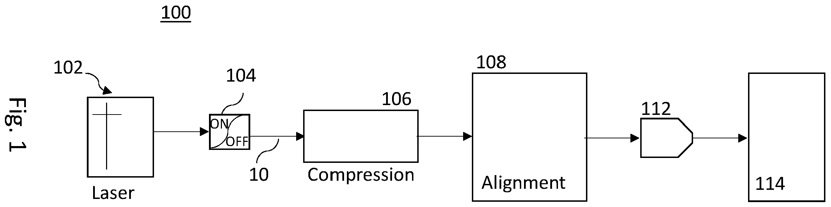

Fig. 1 shows a prior art implementation of a laser system 100. In a traditionally used system, an optical switch 104 is typically arranged right after the laser source 102 and before any beam aligning system 108 for delivering the beam 10 to the application device 114. In the prior art system 100, the optical switch 104 may be followed by a pulse compressor 106, the beam-aligning system 108, and a collimator 112 which delivers the laser beam to the application device 114. The optical switch 104 is typically controlled by the user. The switch 104 is only opened during a relatively short actual processing time needed for the application device 114. At that times, there is no knowledge on where the beam will come out when the switch 104 is opened after certain idle time. In other words, the beam aligning system 108 with its sensors is blind most of the time and cannot keep track of the beam and compensate beam pointing drifts. Finally, the application device 114 may not receive the desired laser beam. Therefore, there is a need for a system that will reliably provide a laser beam to the application device.

The shortcoming of the known art is solved by the present invention by changing the architecture of the laser system 100 and placing the optical switch 104 only when the laser drifts are compensated for and additionally utilizing an optical fiber.

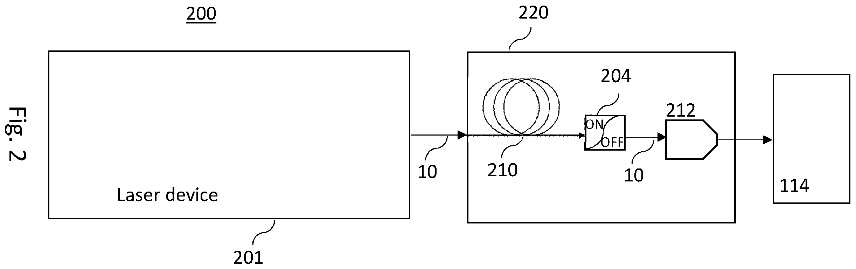

Fig. 2 shows an exemplary embodiment of a laser system 200 according to the present disclosure. The laser system 200 comprises a laser device 201 and an interconnecting device 220. The interconnecting device comprises an optical fiber 210, the switch 204, and an output unit 212. The optical fiber 210 is configured to receive the laser beam 10 from the laser device 201 and deliver the laser beam 10 to the application device 114. The optical fiber 210 may be arranged at an input of the interconnecting device 220 while the optical switch 204 is arranged after the optical fiber 210. The optical fiber 210 ensures precise and convenient coupling with the laser device 201 and further delivery to the application device 114 through the output unit 212. In such system, laser drifts are compensated for prior the interconnecting device 220 and the optical switch 204, which can also be a cause of the laser drifts. The switch 204 is placed close to the application device 114, resulting in a reliable laser system 200 delivering a precise and reliable laser beam 10 to the application device 114.

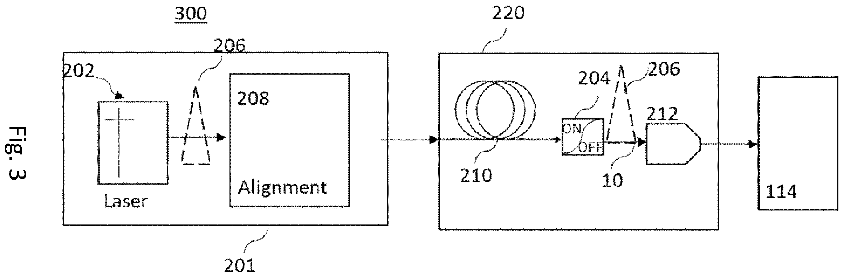

Fig. 3 shows another exemplary embodiment of a laser system 300 according to the present disclosure. The laser system 300 comprises all components as the one shown in Fig. 2 wherein the laser device 201 comprises a pulsed laser source 202 and a fiber coupling unit 208. The pulsed laser source is configured to generate the laser beam 10 and the fiber coupling unit 208 is configured to output the laser beam 10 to the interconnecting device 220. The pulsed laser source 202 is arranged to deliver the laser beam 10 to the fiber-coupling unit 208. The laser beam 10 may be delivered from the laser source 202 to the fiber-coupling unit 208 through free space. The fiber-coupling unit 208 may comprise free-space components configured to guide and couple light into the interconnecting device 220, i.e. into the optical fiber (e.g. HCF) 210. The fiber-coupling unit 208 ensures a continuous and reliable signal into the optical fiber 210. The fiber-coupling unit 208 typically comprises an active alignment system (not shown) configured to compensate for drift of the laser beam 10. The active alignment system, comprising various sensor, detectors, motorized mirrors, etc., may be configured to track the laser beam from the laser source and to dynamically reposition the laser beam 10 such that optimal coupling between the laser device 201 and the interconnecting device 220 is achieved. While the laser source 202 is operating, the fiber-coupling unit 208 continuously receives the laser beam 10 and is thereby capable of continuously compensating for any drifts of the laser beam 10. When the laser source 202 is turned off, the active alignment system is also off, as there is no input beam. Once the laser 202 is turned on, the active alignment system is also on and can actively compensate for the laser's start-up drifts. It is beneficial to have an active alignment system continuously receiving the laser beam as it ensures optimal coupling of the beam with the optical fiber 210. The laser source 202 may comprise a pulse compressor for temporal compression of the laser pulses. Alternatively, the compressor 206 may be arranged after the laser source 202. Alternatively or additionally, the pulse compressor may be arranged in the interconnecting device. The pulse compressors 206 may be exchanged by pulse stretchers, depending on the need from the application device.

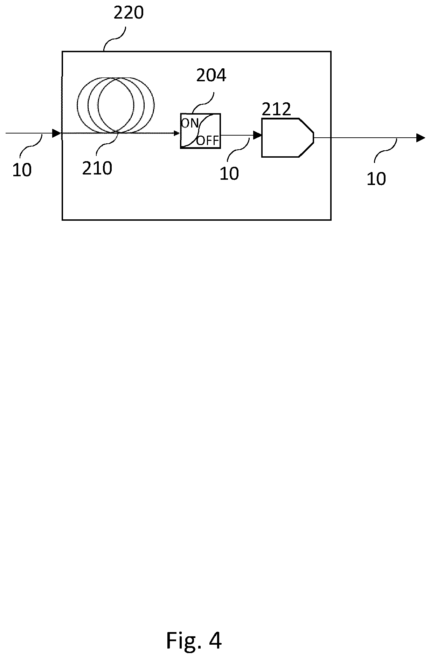

Fig. 4 shows one exemplary implementation of the interconnecting device 220 according to the present disclosure. The interconnecting device 220 is for interconnecting a laser device and an application device. The interconnecting device 220 comprises at least an optical fiber 210, an optical switch 204, and an output unit 212. The interconnecting device 220 is configured to receive a laser beam 10 originating from the laser device and deliver the laser beam 10 to the application device. The optical fiber 210 is arranged at an input of the interconnecting device 220. The optical switch 204 is arranged after the optical fiber 210 and configured to modulate the amplitude of the laser beam 10. The output unit 212 is configured to output the laser beam to the application device.

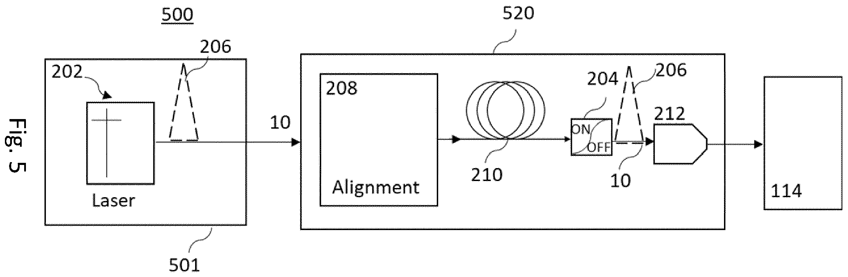

Fig. 5 shows an exemplary embodiment of a laser system 500 according to the present disclosure. The laser system 500 comprises a laser device 501 and an interconnecting device 520. The interconnecting device comprises the fiber-coupling unit 208, an optical fiber 210, the switch 204, and an output unit 212. While the laser device 501 is operating, the fiber-coupling unit 208 continuously receives the laser beam 10 and is thereby capable of continuously compensating for any drifts of the laser beam 10. The optical fiber 210 is configured to receive the laser beam 10 from the fiber-coupling unit 208 and deliver the laser beam 10 to the application device 114. The optical switch 204 is arranged after the optical fiber 210. The optical fiber 210 ensures laser beam delivery to the application device 114 through the output unit 212. In such system, laser drifts are compensated for in the interconnecting device 520 by the fiber-coupling unit 208. The compensation is performed before the optical switch 204, which can also be a cause of the laser drifts. The switch 204 is placed close to the application device 114, resulting in a reliable laser system 500 delivering a precise and reliable laser beam 10 to the application device 114. The laser source 202 may comprise a pulse compressor for temporal compression of the laser pulses. Alternatively, the compressor 206 may be arranged after the laser source 202. Alternatively or additionally, the pulse compressor may be arranged in the interconnecting device. The pulse compressors 206 may be exchanged by pulse stretchers, depending on the need from the application device.

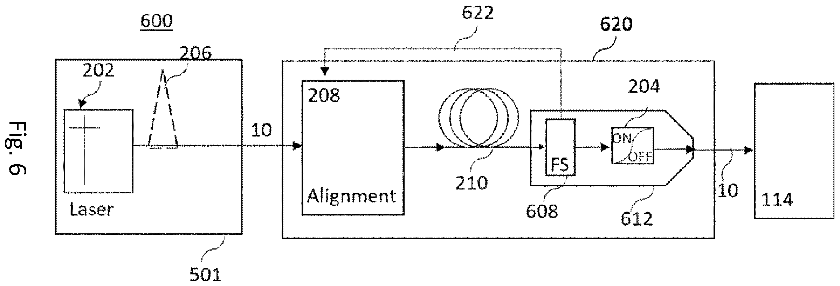

Fig. 6 shows an exemplary embodiment of a laser system 600 according to the present disclosure. The laser system 600 comprises a laser device 501 and an interconnecting device 620. The interconnecting device comprises the fiber-coupling unit 208, an optical fiber 210, the switch 204, and an output unit 612. The switch 204 forms part of the output unit 612. The output unit 612 further comprises various sensors 608, such as a power sensor configured to monitor the output power from the optical fiber 210 and received at the output unit 612. The sensors 608 of the output unit may provide a feedback signal 622 (containing information on, e.g., power delivered to the output unit) to the fiber coupling unit 208 such that the fiber coupling unit can perform additional alignment of the laser beam, and additionally compensate for the laser beam drifts. While the laser device 501 is operating, both the fiber-coupling unit 208 and the output unit sensors 608 continuously receive the laser beam 10 and thereby continuously compensate for any drifts of the laser beam 10. The optical switch 204 is arranged after the output unit sensors 608. In such system, laser drifts are compensated for in the interconnecting device 620 by the fiber-coupling unit 208 additionally assisted by the sensors 608. The compensation is performed before the optical switch 204, which can also be a cause of the laser drifts. The switch 204 is placed close to the application device 114, resulting in a reliable laser system 600 delivering a precise and reliable laser beam 10 to the application device 114.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Relative terms such as "below" or "above" or "higher" or "lower" may be used herein to describe a relationship of one value to another value. It will be understood that when an element is referred to as being "connected" or "coupled" to another component, it can be directly connected or coupled to the other component, or intervening components may be present. In contrast, when a component is referred to as being "directly connected" or "directly coupled" to another component, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

### Reference signs

- 10: laser beam
- 100-600: laser system
- 102, 202: laser source
- 104, 204: optical switch
- 106, 206: pulse compressor
- 108: beam aligning system
- 112: collimator
- 114: application device
- 201, 501: laser device
- 208: fiber coupling unit
- 210: optical fiber
- 212, 612: output unit
- 220, 520, 620: interconnecting device
- 608: output unit sensors
- 622: feedback signal

## Claims

1. An interconnecting device for interconnecting a laser device and an application device, the interconnecting device comprising at least an optical fiber, an optical switch, and an output unit,
the interconnecting device being configured to receive a laser beam from the laser device and deliver the laser beam to the application device,
wherein the optical switch being arranged after the optical fiber and configured to modulate the amplitude of the laser beam, and the output unit being configured to output the laser beam to the application device.

2. The interconnecting device of claim 1, wherein the optical switch is configured to control delivery of the laser beam to the application device.

3. The interconnecting device of claim 1 or 2, wherein the optical switch is configured to allow the laser beam, or a part thereof, to be transmitted into the application device.

4. The interconnecting device of claim 1 or 2, wherein the optical switch is configured to block the laser beam from being transmitted into the application device.

5. The interconnecting device of any of the preceding claims, wherein the optical switch is configured to receive an external input to thereby control delivery of the laser beam to the application device.

6. The interconnecting device of any of the preceding claims, further comprising a post -compressing unit configured to temporally compress pulses of the laser beam, the post-compressing unit being arranged after the optical switch.

7. The interconnecting device of any of the preceding claims, wherein the output unit comprises a beam-collimator configured to collimate the laser beam and deliver it to the application device.

8. The interconnecting device of any of the preceding claims, wherein the optical fiber is a solid-core fiber or a hollow-core fiber.

9. The interconnecting device of any of the preceding claims, wherein the interconnecting device further comprises a fiber-coupling unit arranged before the optical fiber and configured to output the laser beam to the optical fiber, the fiber-coupling unit being configured to compensate for drift of the laser beam.

10. The interconnecting device of claim 9, wherein the fiber-coupling unit comprises an active alignment system configured to compensate for drift of the laser beam.

11. The interconnecting device of claim 10, wherein the active alignment system comprises alignment sensors and beam steering means, the alignment sensors being configured to detect properties of the laser beam and provide input to the beam steering means, the beam steering means being configured to steer the laser beam in accordance with the detected properties such that the laser beam is aligned with an input of the fiber coupling-unit.

12. The interconnecting device of claims 9-11, wherein the fiber-coupling unit comprises a fiber coupler configured to connect with the optical fiber.

13. The interconnecting device of any of the preceding claims, wherein the output unit comprises a power sensor configured to monitor a power output from the optical fiber and received by the output unit, the power sensor being further configured to provide a feedback signal for optimization of the coupling of the laser beam into the optical fiber.

14. The interconnecting device of claims 11 and 13, wherein the power sensor is configured to recalibrate the alignment sensors of the fiber-coupling unit.

15. The interconnecting device of any claim 13 or 14, wherein the output unit comprises a first reference sensor and the fiber-coupling unit comprises a second reference sensor, wherein the first reference sensor and the second reference sensors are configured to communicate and exchange power measurements and to further compare the exchanged measurements and based on the comparison of the exchanged measurements act as a safety mechanism to protect the optical fiber and the application device.

16. A laser system comprising a laser device and an interconnecting device according to claims 1-15, wherein a drift of the laser beam is compensated for in the interconnecting device.

17. A laser system comprising a laser device and an interconnecting device according to any of the claims 1-8 and 13-15, wherein a drift of the laser beam is compensated for prior to being received in the interconnecting device.

18. The laser system of claim 16 or 17, wherein the laser device comprises a pulsed laser source configured to generate the laser beam.

19. The laser system of claim 17 or 18, wherein the laser device comprises a fiber-coupling unit configured to output the laser beam to the interconnecting device, wherein the pulsed laser source is arranged to deliver the laser beam to the fiber-coupling unit through free space.

20. The laser system of any of claims 16-19, wherein the laser device further comprises a compressor configured to temporally compress pulses of the laser beam.
